# EUROPÄISCHE PATENTSCHRIFT

(11) **EP 3 607 016 B1**
(45) Veröffentlichungstag und Bekanntmachung des Hinweises auf die Patenterteilung: **20.08.2025**
(21) Anmeldenummer: 18721264.2
(22) Anmeldetag: 06.04.2018
(51) Int. Cl.: C09J 7/22, B64C 21/10, B32B 3/04, B32B 27/40, B32B 27/36, B32B 27/32, B32B 27/30, B32B 27/06, B32B 7/12, B32B 3/26, B32B 3/00, B64C 23/00, B64C 21/00, B64C 11/20

(54) **VERWENDUNG EINER SELBSTKLEBENDEN KUNSTSTOFFFOLIE**
USE OF A SELF-ADHESIVE PLASTIC FILM
UTILISATION D'UNE FEUILLE PLASTIQUE AUTO-ADHÉSIVE

(30) Priorität: 06.04.2017 DE 102017205912
(43) Veröffentlichungstag der Anmeldung: 12.02.2020
(73) Patentinhaber: Lufthansa Technik AG, 22335 Hamburg (DE)
(72) Erfinder: PFINGSTEN, Kai-Christoph, 20251 Hamburg (DE); NOLTE, Mathias, 20393 Hamburg (DE); OESER, Oliver, 25494 Borstel-Hohenraden (DE); RAHMEL, Leonard Robert, 29336 Nienhagen (DE)
(74) Vertreter: Glawe, Delfs, Moll
(86) Internationale Anmeldenummer: PCT/DE2018/100310
(87) Internationale Veröffentlichungsnummer: WO 2018/184635

(56) Entgegenhaltungen:
- EP-A1- 1 557 450
- EP-A1- 2 631 278
- US-A1- 2004 126 541
- US-A1- 2015 225 069
- TUNINGSKINS AUTOFOLIEN: "Autofolien einfach anbringen - wraparts.com", 12 December 2012 (2012-12-12), XP093027403, Retrieved from the Internet <URL:https://www.youtube.com/watch?app=desktop&v=mwmFZEmx1Hg> [retrieved on 20230228]
- ANONYMOUS: "Wanddesigns selbstgemacht - diy online", DIY FACHMAGAZIN FÜR DIE BAUMARKT- UND GARTENBRANCHE, 1 July 2015 (2015-07-01), pages 1 - 6, XP093144273, Retrieved from the Internet <URL:https://www.diyonline.de/d/diy/2015/7-8-2015/wanddesigns-selbstgemacht.html> [retrieved on 20240321]

## Beschreibung

Die Erfindung betrifft eine Verwendung einer selbstklebenden Kunststofffolie.

Die Verwendung von selbstklebenden Kunststofffolien - d.h. einseitig mit Klebstoff versehene Folien aus Kunststoff - ist im Stand der Technik in verschiedenen Ausfertigungen und für verschiedene Anwendungen bekannt. Neben der Verwendung als Beschriftungsfolien, die bedruckt und/oder auf eine beliebige Form zugeschnitten sind, ist auch die Voll- oder Teilverklebung von z.B. Fahrzeugen oder Fahrzeugteilen als Alternative zum Umlackieren und/oder als Oberflächenschutz bekannt. Auch sind mikrostrukturierte Folien bekannt, mit denen die Oberflächeneigenschaften einer beklebten Oberfläche verändert werden können. So lassen sich durch geeignete Mikrostrukturen Selbstreinigungseffekte oder eine Reduktion des Reibungswiderstands auf turbulent überströmten Oberflächen erreichen.

Werden entsprechende selbstklebende Kunststofffolien auf stark überströmten Oberflächen, bspw. der Außenhaut von Flugzeugen angebracht, tritt an dem der Luftströmung zugewandten Rand der Kunststofffolie regelmäßig erhöhte Erosion der Kunststofffolie aufgrund hoher Strömungsgeschwindigkeiten und/oder mit dem strömenden Fluid mitgeführter Partikel auf. In der Folge müssen teilerodierte Kunststofffolien regelmäßig entfernt und durch neue Kunststofffolien ersetzt werden. Insbesondere bei großflächigen Kunststofffolien ist dies mit erheblichem Aufwand und Kosten verbunden.

In den Dokumenten EP 1 557 440 A1 und EP 2 631 278 A1 werden Klebebänder beschrieben, deren Längskanten mit einer Zackenform versehen sind, um ein werkzeugloses, händisches Abreißen eines Klebebandstücks in einer gewünschten Länge zu verbessern.

Das Dokument US 2004/0126541 A betrifft eine Riblet-Folie mit entsprechend ausgestalteter Oberfläche.

Das Dokument US 2015/0225069 A1 beschreibt einen Klebepatch für die Luftstrombeeinflussung zur Geräuschreduzierung bei Flugzeugen.

Weiterhin bekannt sind mit Mustern versehene Folierungen zur Verzierung von Autos sowie Malerklebeband zur Gestaltung von Innenwänden.

Der Erfindung liegt die Aufgabe zugrunde, eine Kunststofffolie so zu verwenden, dass die Nachteile aus dem Stand der Technik nicht mehr oder nur noch im verminderten Umfang auftreten.

Gelöst wird diese Aufgabe durch eine Verwendung einer Kunststofffolie gemäß Anspruch 1. Vorteilhafte Weiterbildungen sind Gegenstand der abhängigen Ansprüche.

Offenbar wird eine selbstklebende Kunststofffolie zum Aufbringen auf überströmten Oberflächen, wobei die Kunststofffolie flächig ist, einen umlaufenden Rand aufweist und auf einer Seite mit Klebstoff versehen ist, und der Rand der Kunststofffolie wenigstens abschnittsweise als in der Folienebene wellenförmige Kante ausgestaltet ist.

Offenbart wird weiterhin eine überströmte Oberfläche mit darauf angebrachter selbstklebender Kunststofffolie, wobei für die Überströmung der Oberfläche wenigstens eine vorgegebene Hauptströmungsrichtung besteht, die Kunststofffolie gemäß der Offenbarung der Beschreibung ausgebildet ist und die Kunststofffolie derart auf der überströmten Oberfläche angeordnet ist, dass die Überströmung der Oberfläche in wenigstens eine Hauptströmungsrichtung auf eine wellenförmige Kante der Kunststofffolie auftrifft.

Die Erfindung betrifft die Verwendung einer selbstklebenden Kunst

stofffolie auf einer überströmten Oberfläche mit wenigstens einer vorgegebenen Hauptströmungsrichtung, wobei die Kunststofffolie flächig ist, einen umlaufenden Rand aufweist, auf einer Seite mit Klebstoff versehen ist und derart auf der überströmten Oberfläche aufgeklebt wird, dass die Überströmung der Oberfläche in wenigstens eine Hauptströmungsrichtung auf eine wellenförmige Kante der Kunststofffolie auftrifft, und wobei zur Verringerung der Erosion der Kunststofffolie der Rand der Kunststofffolie wenigstens abschnittsweise als in der Folienebene wellenförmige Kante ausgestaltet ist, wobei die Wellenform eine Amplitude von 1 cm bis 10 cm und eine Wellenlänge von 1 cm bis 10 cm aufweist.

Zunächst werden einige in Zusammenhang mit der Erfindung verwendete Begriffe erläutert.

Mit einer "überströmten Oberfläche" ist eine Oberfläche bezeichnet, an der ein Fluid - bspw. Luft - derart entlangströmt, sodass es zu einer Wandreibung zwischen Fluid und Oberfläche kommt. Die Überströmung kann dabei laminar oder turbulent sein.

Eine "Hauptströmungsrichtung" bezeichnet eine Strömungsrichtung, in welche die Überströmung einer Oberfläche zu einem überwiegenden Teil erfolgt bzw. zu erwarten ist. Bei einem Flugzeug ergibt sich die - lokal über die gesamte Außenwand eines Flugzeuges durchaus variierende - Hauptströmungsrichtung über die Außenwand bspw. aus der Umströmung des Flugzeugs im Reiseflug. An der Außenwand eines Schnellzuges sind bspw. regelmäßig zwei Hauptströmungsrichtungen zu erwarten, die abhängig von der Fahrtrichtung des Zuges maßgeblich sind.

Die Erfindung hat erkannt, dass die Erosion von auf überströmten Oberflächen angebrachten Kunststofffolien insbesondere an demjenigen Rand auftritt, auf den die Strömung unmittelbar auftrifft. An diesem Rand wirkt die Kunststofffolie nämlich als eine Stufe auf der überströmten Oberfläche und stellt somit ein Strömungshindernis dar. Die Kunststofffolie ist am fraglichen Rand bereits durch die Strömung als solche stärker belastet als im übrigen Bereich. Darüber hinaus kommt regelmäßig zum Auftreffen von mit dem Strömungsfluid mitgeführter Partikel - wie bspw. Sandkörner oder Eiskristalle - auf die Stufe an dem fraglichen Rand der Kunststofffolie. Die Erosion der Kunststofffolie an diesem Rand ist daher deutlich höher als in den übrigen Bereichen der Kunststofffolie.

Bei der erfindungsgemäßen Verwendung der Kunststofffolie wird diese Erosion verringert, indem der Rand der Kunststofffolie abschnittsweise als ein der Folienebene wellenförmige Kante ausgebildet ist. Die Wellenform der Kante ist also in der Draufsicht auf die Folie zu erkennen. Weist derjenige Abschnitt des Randes, auf den die Strömung auftrifft, eine entsprechende wellenförmige Kante auf, kann dadurch die Erosion in diesem Bereich deutlich reduziert werden. Durch die Wellenform der Kante wird die Strömung im Bereich des entsprechend ausgestalteten Randes derart verändert, dass die eine Erosion fördernden Effekte, bspw. der Aufprall von mit der Strömung mitgeführter Partikel, reduziert werden können.

Die wellenförmige Kante kann vorzugsweise sägezahn-, dreiecks- oder sinusförmig sein. Die Wellenform weist dabei eine Amplitude von 1 cm bis 10 cm, vorzugsweise eine Amplitude von 1 cm bis 5 cm, weiter vorzugsweise von ungefähr 2 cm auf. Die mit der Wellenlänge vergleichbare seitliche Ausdehnung einer Welle der Wellenform beträgt 1 cm bis 10 cm, weiter vorzugsweise 1 cm bis 5 cm, besonders bevorzugt ungefähr 2 cm auf.

In vielen Fällen weist die Kunststofffolie eine im Wesentlichen rechteckige Form auf. In diesem Fall ist bevorzugt, wenn wenigstens eine Seite des Rechtecks als wellenförmige Kante ausgestaltet ist. Die Kunststofffolie kann dann mit eben dieser Seite gegen die Hauptströmungsrichtung auf einer Oberfläche orientiert aufgebracht werden. Insbesondere in Fällen, in denen mehrere Hauptströmungsrichtungen bestehen, können aber auch mehrere Seiten der Kunststofffolie als wellenförmige Kante ausgestaltet sein.

Es ist bevorzugt, wenn die die Kunststofffolie wenigstens im Bereich der wellenförmigen Kante derart abgeschrägt ist, dass die mit Klebstoff versehene Seite über die andere Seite hervorstehend ist. Im Querschnitt weist die Kunststofffolie an der wellenförmigen Kante also eine Keilform auf, mit der im auf eine Oberfläche aufgebrachten Zustand die Strömung im Bereich der fraglichen Kante weiter verbessert werden kann. Durch die zusätzliche Keilform können die erosionsverursachenden oder zumindest -begünstigenden Strömungseffekte nämlich weiter verringert werden.

Bei der Kunststofffolie kann es sich um eine Opferfolie, Lackfolie, Bildfolie oder Ribletfolie handeln. Bei einer Lackfolie handelt es sich um eine im Regelfall einfarbige Kunststofffolie, deren Oberseite in Anmutung und/oder technischen Eigenschaften wenigstens lackähnlich ist. Eine Bildfolie kann bspw. mit Hilfe von Digitaldruck mit einem beliebigen Muster versehen werden.

Bei einer Opferfolie handelt es sich um eine Kunststofffolie, die zum Schutz einer anderen, in der Regel größeren und/oder höherwertigeren Folie die Bereiche des Randes der anderen Folie überlappend angeordnet sind, an denen Erosion zu erwarten ist. Die Erosion tritt dann an der günstigeren und/oder leichter auszutauschenden Opferfolie auf, nicht aber an der zu schützenden Folie.

Eine Ribletfolie ist eine mikrostrukturierte Folie, deren Struktur den Reibungswiederstand bei einer turbulenten Überströmung in zumindest eine vorgegebene Richtung, die vorzugsweise mit der wenigstens einen Hauptströmungsrichtung übereinstimmt, reduziert wird.

Die Kunststofffolie kann bevorzugt aus Polyvinylchlorid (PCV), Polyurethane (PU), Polyethylen (PE) oder Polyethylenterephthalat (PET), der Klebstoff kann ein Klebstoff auf Acryl-Basis sein.

Bei der überströmten Oberfläche mit darauf angebrachter selbstklebender Kunststofffolie, bei der für die Überströmung der Oberfläche wenigstens eine vorgegebene Hauptströmungsrichtung besteht, ist die Kunststofffolie derart auf der überströmten Oberfläche angeordnet, dass die Überströmung der Oberfläche in wenigstens eine Hauptströmungsrichtung auf eine wellenförmige Kante der Kunststofffolie auftrifft. Zur weitergehenden Erläuterung wird auf die vorstehenden Ausführungen verwiesen.

Bei der Kunststofffolie kann es sich insbesondere um eine Opferfolie handeln, die zumindest in den Bereichen über dem Rand einer zu schützenden Folie überlappend angeordnet ist, auf die Strömung in wenigstens eine Hauptströmungsrichtung auftrifft. In diesem Fall tritt eine evtl. Erosion an der Opferfolie, nicht aber an der durch die Opferfolie geschützten Folie auf. Um auch die Erosion der Opferfolie gering zu halten, ist diese gemäß der Offenbarung der Beschreibung ausgestaltet, weist also insbesondere eine wellenförmige Kante auf, die entsprechend der Hauptströmungsrichtung(en) angeordnet ist.

Ist die Kunststofffolie eine Opferfolie beträgt die Überlappung mit der zu schützenden Folie bevorzugt 1,5 cm bis 5 cm, vorzugsweise 1,5 cm bis 2,5 cm, weiter vorzugsweise ca. 2 cm. Die Überlappung ist dabei als Länge ausgehend vom Rand der zu schützenden Folie definiert, über welche die Opferfolie auf der zu schützenden Folie aufgeklebt ist. Durch eine entsprechende Überlappung wird zum einen ein guter Erosionsschutz, zum anderen ein geringes Mehrgewicht durch die Opferfolie erreicht.

Soll die Kunststofffolie eine bereits beschädigte bzw. erodierte Opferfolie ersetzen, kann diese zunächst entfernt werden, bevor die Kunststofffolie als neue Opferfolie aufgebracht wird. Es ist aber auch möglich, die Kunststofffolie unmittelbar über eine beschädigte bzw. erodierte Opferfolie zu kleben. In diesem Fall bleibt die beschädigte bzw. erodierte Opferfolie unterhalb der neu aufgeklebten Kunststofffolie bestehen.

Bei der überströmten Oberfläche kann es sich bevorzugt um die Außenhaut eines Flugzeuges, vorzugsweise eines Verkehrsflugzeuges, handeln.

Zur Erläuterung der erfindungsgemäßen Verwendung wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1a, b:: ein erstes Ausführungsbeispiel einer überströmten Oberfläche mit einer Kunststofffolie;
- Figur 2a, b:: ein zweites Ausführungsbeispiel einer überströmten Oberfläche mit einer Kunststofffolie;
- Figur 3a, b:: ein drittes Ausführungsbeispiel einer überströmten Oberfläche mit einer Kunststofffolie; und
- Figur 4:: eine alternative Ausführungsvariante zum Schutz von Folien vor Erosion durch eine Opferfolie.

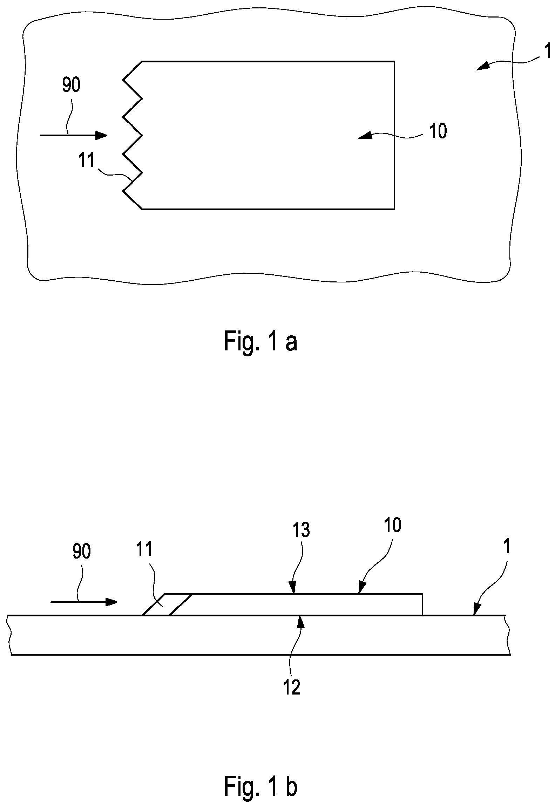

In Figur 1a, b ist ein erstes Ausführungsbeispiel einer überströmten Oberfläche 1 mit einer Kunststofffolie 10 sowohl in Draufsicht als auch in einer Seitenansicht gezeigt.

Bei der überströmten Oberfläche 1 handelt es sich um ein Teilstück der Außenhaut eines Flugzeuges (nicht dargestellt), welches im Reiseflug in die durch den Pfeil 90 angedeutete Hauptströmungsrichtung von Luft überströmt wird.

Auf der Oberfläche 1 ist eine flächige selbstklebende Kunststofffolie 10 angeordnet. Die Kunststofffolie 10 ist dabei mithilfe ihrer Beschichtung mit Klebstoff auf der Oberfläche 1 zugewandten Seite 12 fest mit der Oberfläche 1 verbunden und weist eine Rechteckform auf.

An derjenigen Seite der rechteckförmigen Kunststofffolie 10, auf den die Luftströmung in Hauptströmungsrichtung 90 auf die Kunststofffolie 10 auftrifft, ist der Rand der Kunststofffolie 10 als wellenförmige Kante 11 ausgebildet. Die wellenförmige Kante 11 ist dabei dreiecksförmig ausgestaltet.

Darüber hinaus ist die Kunststofffolie 10 im Bereich der wellenförmigen Kante 11 derart abgeschrägt, dass die mit Klebstoff versehende Seite 12 der Kunststofffolie 10 über die andere Seite 13 hervorstehend ist.

Durch die entsprechend ausgestaltete Kante 11 kann die Erosion der Kunststofffolie 10 in Folge der Überströmung reduziert werden.

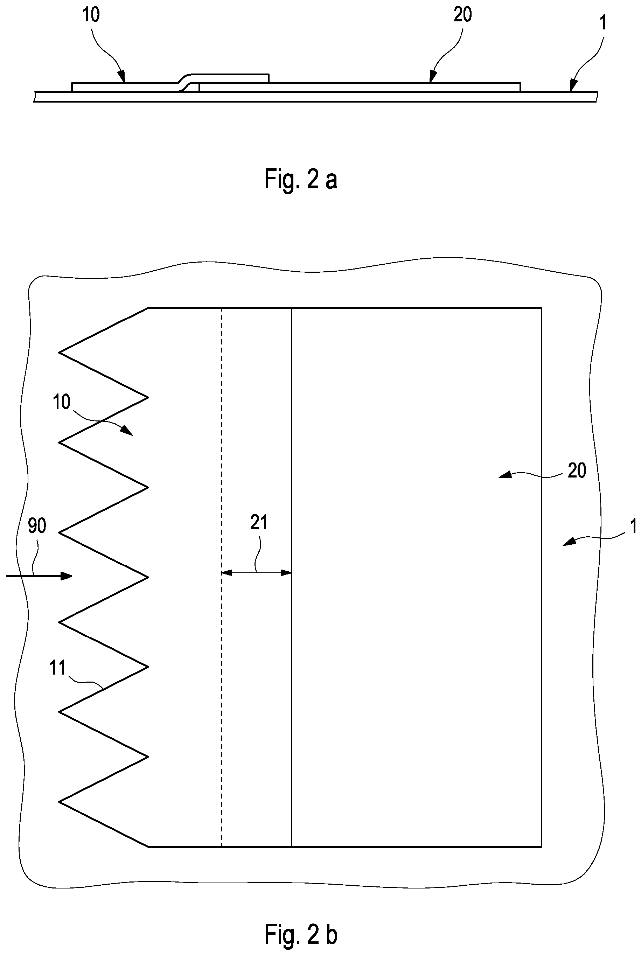

In Figur 2a, b ist ein zweites Ausführungsbeispiel einer Oberfläche 1 gezeigt, die in der Hauptströmungsrichtung 90 überströmt wird. Die Kunststofffolie 10 in diesem Ausführungsbeispiel ist vergleichbar zu derjenigen aus Figur 1a, b ausgestaltet, wobei die Kunststofffolie 10 jedoch als Opferfolie 10 für die zu schützende Folie 20 genutzt wird.

Die im Wesentlichen rechteckige Kunststofffolie 10 ist mit dem der Strömungsrichtung 90 zugewandten Rand der zu schützenden Folie 20 überlappend auf der Oberfläche 1 bzw. der zu schützenden Folie 20 angepasst. Die Überlappung 21 beträgt dabei ca. 2 cm. Die Folie 20 ist durch die Kunststofffolie 10 vor Erosion aufgrund der Strömung 90 weitestgehend geschützt.

Um auch die Erosion der Kunststofffolie 10 trotz der Eigenschaft als Opferfolie selbst möglichst gering zu halten, weist die Kunststofffolie 10 an ihrem, der Strömung zugewandten Rand eine wellenförmige Kante 11 auf.

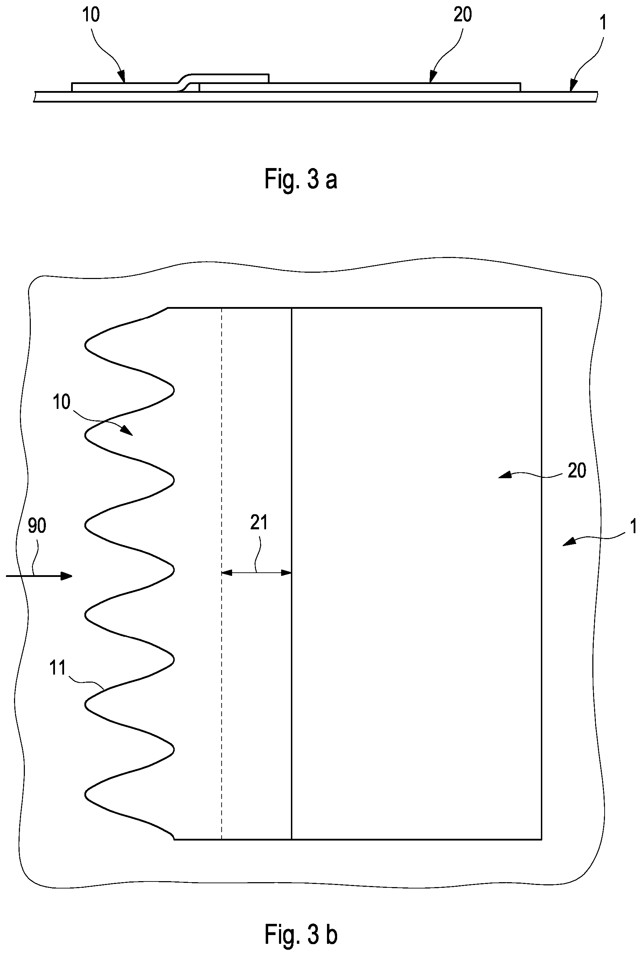

Im Ausführungsbeispiel gemäß Figur 2a, b ist die wellenförmige Kante 11 dreieckförmig ausgestaltet. Alternativ kann die wellenförmige Kante 11 aber bspw. auch sinusförmig ausgestaltet sein. Entsprechendes ist für das Ausführungsbeispiel in Figur 3a, b gezeigt, welches ansonsten mit dem Ausführungsbeispiel gemäß Figur 2a, b übereinstimmt.

Die in Figuren 2a, b und 3a, b dargestellten, also Opferfolien eingesetzten Kunststofffolien 10 weisen aufgrund ihrer wellenförmigen Kante 11 bereits eine reduzierte Erosionsneigung auf. Dennoch stellt auch eine entsprechende Opferfolie ein Strömungshindernis für die Strömung 90 entlang der Oberfläche 1 dar, sodass an der wellenförmigen Kante 11 grundsätzlich eine Erosion auftritt, wenn auch in deutlich reduziertem Umfang gegenüber Folien aus dem Stand der Technik. Insbesondere im Flugzeugbau ist es in einigen Szenarien aber sogar möglich, eine Opferfolie derart auf einer Oberfläche anzubringen, dass sie kein unmittelbares Strömungshindernis aufgrund des Übergangs von Oberfläche zu Opferfolie bilden, womit auch die aufgrund eines Strömungshindernisses auftretenden erosionsfördernden Effekte vermieden werden können.

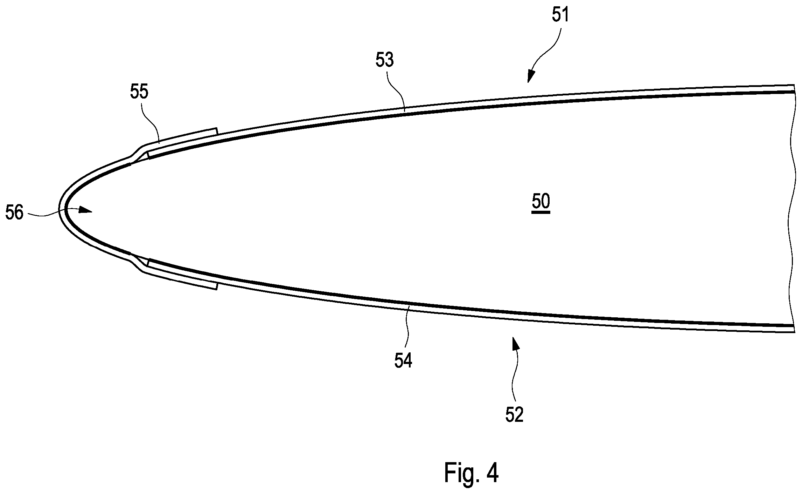

In Figur 4 ist beispielhaft dargestellt, wie ein Flügelprofil 50 sowohl auf der Oberseite 51 als auch auf der Unterseite 52 mit jeweils einer Folie 53, 54 beklebt ist. Die Opferfolie 55 erstreckt sich derart vollständig über die Profilnase 56, dass sie mit beiden Folien 53, 54 überlappend ist. Der in Figur 4 gezeigten Anordnung der Opferfolie gebührt ggf. eigenständiger Schutz.

## Patentansprüche

1. Verwendung einer selbstklebenden Kunststofffolie (10) auf einer überströmten Oberfläche (1) mit wenigstens einer vorgegebenen Hauptströmungsrichtung (90), wobei die Kunststofffolie (10) flächig ist, einen umlaufenden Rand aufweist, auf einer Seite (12) mit Klebstoff versehen ist und derart auf der überströmten Oberfläche (1) aufgeklebt wird, dass die Überströmung der Oberfläche (1) in wenigstens eine vorgegebene Hauptströmungsrichtung (90) auf eine wellenförmige Kante (11) der Kunststofffolie (10) auftrifft, **dadurch gekennzeichnet, dass**
zur Verringerung der Erosion der Kunststofffolie (10) der Rand der Kunststofffolie (10) wenigstens abschnittsweise als in der Folienebene wellenförmige Kante (11) ausgestaltet ist, wobei die Wellenform eine Amplitude von 1 cm bis 10 cm und eine Wellenlänge von 1 cm bis 10 cm aufweist.

2. Verwendung nach Anspruch 1,
**dadurch gekennzeichnet, dass**
die Kunststofffolie (10) eine Opferfolie ist, die zumindest in den Bereichen über dem Rand einer zu schützenden Folie (20) überlappend angeordnet ist, auf die Strömung in wenigstens eine Hauptströmungsrichtung (90) auftrifft.

3. Verwendung nach einem der vorhergehenden Ansprüche,
**dadurch gekennzeichnet, dass**
die Überlappung (21) 1,5 cm bis 5 cm, vorzugsweise 1,5 cm bis 2,5 cm, weiter vorzugsweise ca. 2 cm beträgt.

4. Verwendung nach einem der vorhergehenden Ansprüche,
**dadurch gekennzeichnet, dass**
die Kunststofffolie (10) als Opferfolie über eine bereits verschlissene Opferfolie geklebt wird.

5. Verwendung nach einem der vorhergehenden Ansprüche,
**dadurch gekennzeichnet, dass**
die überströmte Oberfläche (1) die Außenhaut eines Flugzeuges ist.

6. Verwendung nach einem der vorhergehenden Ansprüche,
**dadurch gekennzeichnet, dass**
die wellenförmige Kante (11) sägezahn-, dreiecks- oder sinusförmig ist, wobei die Wellenform vorzugsweise eine Amplitude von 1 cm bis 5 cm, weiter vorzugsweise von ungefähr 2 cm aufweist und/oder die Wellenform eine Wellenlänge von vorzugsweise 1 cm bis 5 cm, besonders bevorzugt ungefähr 2 cm aufweist.

7. Verwendung nach einem der vorhergehenden Ansprüche,
**dadurch gekennzeichnet, dass**
die Kunststofffolie (10) eine Rechteckform aufweist und wenigstens eine Seite des Rechtecks als wellenförmige Kante (11) ausgestaltet ist.

8. Verwendung nach einem der vorhergehenden Ansprüche, **dadurch gekennzeichnet, dass**
die Kunststofffolie (10) wenigstens im Bereich der wellenförmigen Kante (11) derart abgeschrägt ist, dass die mit Klebstoff versehene Seite (12) der Kunststofffolie über die andere Seite (13) hervorstehend ist.

9. Verwendung nach einem der vorhergehenden Ansprüche,
**dadurch gekennzeichnet, dass**
die Kunststofffolie (10) als Opferfolie, Lackfolie, Bildfolie oder Ribletfolie ausgestaltet ist.

10. Verwendung nach einem der vorhergehenden Ansprüche,
**dadurch gekennzeichnet, dass**
die Kunststofffolie (10) aus Polyvinylchlorid (PCV), Polyurethane (PU), Polyethylen (PE) oder Polyethylenterephthalat (PET) und/oder der Klebstoff ein Klebstoff auf Acryl-Basis ist.

## Claims

1. Use of a self-adhesive plastic film (10) on an overflowed surface (1), with at least one predetermined main direction of flow (90), wherein the plastic film (10) is planar, has a peripheral border, is provided with adhesive on one side (12) and is adhesively attached on the overflowed surface (1) in such a way that the overflow of the surface (1) in at least one predetermined main direction of flow (90) impinges on a wavy edge (11) of the plastic film (10),
**characterized in that**,
to reduce the erosion of the plastic film (10), the border of the plastic film (10) is designed at least in some portions as an edge (11) that is wavy in the plane of the film, wherein the wave form has an amplitude of 1 cm to 10 cm and a wave length of 1 cm to 10 cm.

2. Use according to Claim 1,
**characterized in that**
the plastic film (10) is a sacrificial film, which is arranged as overlapping at least in the regions over the border of a film (20) to be protected that are impinged by the flow in at least one main direction of flow (90).

3. Use according to one of the preceding claims, **characterized in that**
the overlap (21) is 1.5 cm to 5 cm, preferably 1.5 cm to 2.5 cm, more preferably about 2 cm.

4. Use according to one of the preceding claims, **characterized in that**
the plastic film (10) is adhesively attached as a sacrificial film over an already worn sacrificial film.

5. Use according to one of the preceding claims, **characterized in that**
the overflowed surface (1) is the outer skin of an aircraft.

6. Use according to one of the preceding claims, **characterized in that**
the wavy edge (11) is of a sawtooth, triangular or sinusoidal form, wherein the wave form preferably has an amplitude of 1 cm to 5 cm, more preferably of approximately 2 cm, and/or the wave form has a wave length of preferably 1 cm to 5 cm, particularly preferably approximately 2 cm.

7. Use according to one of the preceding claims, **characterized in that**
the plastic film (10) has a rectangular form and at least one side of the rectangle is designed as a wavy edge (11).

8. Use according to one of the preceding claims, **characterized in that**,
at least in the region of the wavy edge (11), the plastic film (10) is bevelled in such a way that the side (12) of the plastic film that is provided with adhesive is projecting beyond the other side (13).

9. Use according to one of the preceding claims, **characterized in that**
the plastic film (10) is designed as a sacrificial film, lacquer film, image film or riblet film.

10. Use according to one of the preceding claims, **characterized in that**
the plastic film (10) is of polyvinyl chloride (PCV), polyurethane (PU), polyethylene (PE) or polyethylene terephthalate (PET) and/or the adhesive is an acrylic-based adhesive.

## Revendications

1. Utilisation d'une feuille de matière plastique autocollante (10) sur une surface (1) balayée par un écoulement avec au moins une direction d'écoulement principale (90) prédéfinie, la feuille de matière plastique (10) étant plane, présentant un bord périphérique, étant pourvue d'adhésif sur un côté (12) et étant collée sur la surface (1) balayée par un écoulement de telle sorte que le balayage par un écoulement de la surface (1) dans au moins une direction d'écoulement principale (90) prédéfinie est incident sur une arête ondulée (11) de la feuille de matière plastique (10),
**caractérisée en ce que**
pour réduire l'érosion de la feuille de matière plastique (10), le bord de la feuille de matière plastique (10) est conçu au moins par sections sous forme d'arête ondulée (11) dans le plan de la feuille, la forme d'onde présentant une amplitude de 1 cm à 10 cm et une longueur d'onde de 1 cm à 10 cm.

2. Utilisation selon la revendication 1,
**caractérisée en ce que**
la feuille de matière plastique (10) est une feuille sacrificielle qui est agencée en chevauchement au moins dans les zones au-dessus du bord d'une feuille (20) à protéger sur laquelle l'écoulement est incident dans au moins une direction d'écoulement principale (90).

3. Utilisation selon l'une quelconque des revendications précédentes,
**caractérisée en ce que**
le chevauchement (21) est de 1,5 cm à 5 cm, de préférence de 1,5 cm à 2,5 cm, de préférence encore d'environ 2 cm.

4. Utilisation selon l'une quelconque des revendications précédentes,
**caractérisée en ce que**
la feuille de matière plastique (10) est collée en tant que feuille sacrificielle sur une feuille sacrificielle déjà usée.

5. Utilisation selon l'une quelconque des revendications précédentes,
**caractérisée en ce que**
la surface balayée par un écoulement (1) est la peau extérieure d'un avion.

6. Utilisation selon l'une quelconque des revendications précédentes,
**caractérisée en ce que**
l'arête ondulée (11) est en dents de scie, triangulaire ou sinusoïdale, la forme d'onde présentant de préférence une amplitude de 1 cm à 5 cm, de préférence encore d'approximativement 2 cm et/ou la forme d'onde présentant une longueur d'onde de préférence de 1 cm à 5 cm, de manière particulièrement préférée d'approximativement 2 cm.

7. Utilisation selon l'une quelconque des revendications précédentes,
**caractérisée en ce que**
la feuille de matière plastique (10) présente une forme rectangulaire et au moins un côté du rectangle est conçu sous forme d'arête ondulée (11).

8. Utilisation selon l'une quelconque des revendications précédentes, **caractérisée en ce que** la feuille de matière plastique (10) est biseautée au moins dans la zone de l'arête ondulée (11) de telle sorte que le côté (12) de la feuille de matière plastique pourvu d'adhésif est en saillie sur l'autre côté (13).

9. Utilisation selon l'une quelconque des revendications précédentes,
**caractérisée en ce que**
la feuille de matière plastique (10) est conçue en tant que feuille sacrificielle, feuille de vernis, feuille d'image ou feuille à micro-rainures.

10. Utilisation selon l'une quelconque des revendications précédentes,
**caractérisée en ce que**
la feuille de matière plastique (10) est en chlorure de polyvinyle (PCV), en polyuréthane (PU), en polyéthylène (PE) ou en polyéthylène téréphtalate (PET) et/ou l'adhésif est un adhésif à base d'acrylique.
